# EUROPEAN PATENT SPECIFICATION

(11) **EP 3 189 085 B1**
(45) Date of publication and mention of the grant of the patent: **07.08.2019**
(21) Application number: 15782094.5
(22) Date of filing: 04.09.2015
(51) Int. Cl.: C08F 4/655, C08F 110/02

(54) **A METHOD FOR PREPARING HIGH ACTIVITY ETHYLENE POLYMERIZATION CATALYST**
VERFAHREN ZUR HERSTELLUNG EINES HOCHAKTIVEN ETHYLENEPOLYMERISATIONSKATALYSATORS
PROCÉDÉ DE PRÉPARATION DE CATALYSEUR DE POLYMÉRISATION D'ÉTHYLÈNE À ACTIVITÉ ÉLEVÉE

(30) Priority: 04.09.2014 TH 1401005145
(43) Date of publication of application: 12.07.2017
(73) Proprietor: PTT Global Chemical Public Company Limited, Bangkok 10900 (TH)
(72) Inventor: SAMINGPRAI, Sutheerawat, Bangkok 10900 (TH); KANGWANWONG, Tienkul, Bangkok 10900 (TH); PHETRAK, Nared, Bangkok 10900 (TH)
(74) Representative: Curell Suñol S.L.P.
(86) International application number: PCT/TH2015/000055
(87) International publication number: WO 2016/036325

(56) References cited:
- EP-A1- 0 606 908
- EP-A1- 0 659 778
- EP-A1- 2 370 477
- WO-A1-2004/065431
- GB-A- 1 485 520
- US-A- 4 564 605

## Description

### FIELD OF THE INVENTION

The present invention relates to chemical mixture and chemical process for preparing high activity ethylene polymerization catalyst.

### BACKGROUND OF THE INVENTION

It is well known that physical property and mechanical property of polymer depends on catalyst used in polymerization reaction. Therefore, there are attempts to the study and development of catalytic system for good characteristics of prepared polymer which is appropriate to the industrial requirement.

Until present, there has been well known reported that Ziegler-Natta catalyst is the suitable catalyst for polyolefin polymerization process. However, preparation of industrial polyolefin using said catalyst always have problem in the formation of low molecular weight polyolefin or wax as by-product, which are cheap and unwanted products. Therefore, high activity catalyst has been developed to overcome such problem.

Moreover, using Ziegler-Natta catalyst always results in a broad molecular weight distribution polymer which is a limitation to the applications that need narrow molecular weight distribution polymer such as nonwoven, monofilament, and injection. Therefore, there are many attempts to overcome said problem where maintaining high activity of catalyst.

US patent number US6429270 disclosed a method for improving Ziegler-Natta catalyst by using at least 2 supports together with treating the catalyst with organoaluminium compound and an electron donor having silicon as a component. It was found that the catalyst prepared by said method gave high activity for propylene polymerization. However, improving of catalyst according to said invention comprised with many steps, made it difficult in preparation, and was limitation in preparation of catalyst for using in industrial scale.

European patent number EP2428526 disclosed a preparation method for polyethylene with homogeneity using Ziegler-Natta catalyst which is contacted with organoaluminium compound and activated partial polymerization reaction with ethylene before substantial reaction in multi-stages reactor. However, said process comprised many steps, making it difficult and complicated for the preparation.

US patent number US6916895 disclosed a preparation method for Ziegler-Natta catalyst that is able to modify molecular weight distribution of polyolefin by controlling size and morphology of the catalyst. Said process comprising the following steps: treating magnesium dialkoxide compound with titanium compound and organoaluminium compound, then treating at high temperature of about 90 to 150 °C for about 30 minutes to 2 hours. However, said process comprised many steps and need high temperature treatment which could be difficult for industrial scale, including higher production cost which is limitation of this invention.

US patent number US7365138 disclosed an improving method for Ziegler-Natta catalyst by contacting the catalyst with organoaluminium compound and/or olefin before using as the catalyst for olefin polymerization. This was found that the catalyst of said method could reduce the formation of small particle of polymer. However, said catalyst had low activity.

Document WO 2004065431 A1 discloses a method of polymerization and copolymerization of ethylene, which is carried out in the presence of (a) a solid titanium complex catalyst prepared by the steps of (i) preparing a magnesium solution by contacting halogenated magnesium compounds with alcohol, (ii) reacting the magnesium solution with ester compound having at least one hydroxyl group and silicon compound having alkoxy group, (iii) preparing a solid titanium catalyst component by reacting mixture of titanium compound and haloalkane compound; and (iv) producing solid titanium complex catalyst by reacting the solid titanium catalyst component with mixture of aluminum compound and haloalkane compound, or haloalkane; and (b) organometallic compounds in Group II or III of the Periodic Table.

Document EP 2370477 A1 discloses a catalyst component for the polymerization of olefins comprising Mg, Ti and Cl obtained by a process comprising the following steps: a) reacting a precursor of formula MgCl2.mEtOH, wherein m = 1.5 having a porosity due to pores with radius up to 1 µ of higher than 0.4 cm3/g with an alcohol of formula RIOH where RI is an alkyl different from ethyl, a cycloalkyl or aryl radical having 3-20 carbon atoms said RIOH being reacted with the said precursor using molar ratio RI0H/Mg ranging from 0.01 to 10; and b) reacting the product obtained in (a) with TiCI4 using Ti/Mg molar ratio ranging from 0.01 to 15.

From all above, this invention aims to improve an olefin polymerization catalyst to have high activity, whereas polyolefin obtained from said catalyst have narrow molecular weight distribution. Said process can be performed easily, reducing complicated steps, and can be performed at low temperature.

### SUMMARY OF INVENTION

The present invention relates to a method for preparing high activity ethylene polymerization catalyst, said method comprising the following steps:
(a) adding magnesium halide into alcohol solvent selected from ethanol, isopropanol, butanol, hexanol, 2-hexanol, octanol, or a mixture thereof;
(b) precipitating solution from (a) in solution of organic solvent containing organo compound of group III element selected from alkyl compound of group III element, tris(halophenyl)borane, alkylaluminium alkoxide, dialkylaluminium chloride, or a mixture thereof;
(c) adding titanium compound selected from trialkoxy titanium monochloride, dialkoxy titanium dichloride, alkoxy titanium trichloride, titanium halide, or a mixture thereof into mixture from (b) to obtain a catalyst;
(d) treating the catalyst obtained from (c) with organoaluminium compound selected from trialkylaluminium, alkylaluminium alkoxide, alkylaluminium halide, or a mixture thereof at temperature ranging from 0 to 60 °C for 2 to 5 hours, wherein the mole ratio of aluminium to titanium (Al/Ti) for treatment is in a range of 1 to 30.

### BRIEF DESCRIPTION OF THE DRAWINGS

Figure 1 shows activation percentage of the catalyst after reacting with TEA in different times, wherein the mole ratio of Al/Ti for treatment is 5 and treatment temperature is at room temperature.
Figure 2 shows activation percentage of the catalyst after reacting with TEA in different times, wherein the mole ratio of Al/Ti for treatment is 1 and treatment temperature is 0 °C.
Figure 3 shows the results of the mole ratio of Al/Ti to activation percentage after reacting with TEA.
Figure 4 shows TREF-GPC chromatogram showing molecular weight distribution of the polymer.
Figure 5 shows tensile modulus property of the polymer resulted from the catalyst according to the invention.
Figure 6 shows tensile strength at yield point property of the polymer resulted from the catalyst according to the invention.

### DETAILED DESCRIPTION OF THE INVENTION

The present invention relates to a method for preparing high activity ethylene polymerization catalyst which can be described by the following aspects.

### Definition

All technical and scientific terms used herein have the meaning that will be understood by those ordinary skilled in the art unless it has been defined otherwise.

Any instrument, equipment, method or chemical mentioned herein, unless indicated otherwise, shall mean instrument, equipment, method or chemical that are generally used or practiced by a person skilled in the art of this field unless stated otherwise that they are tools, equipment, methods, or chemicals specific only in this invention.

Use of singular nouns or pronouns when used with "comprising" in claims and/or specification means "one" and will also include "one or more", "at least one", and "one or more than one".

Any method, process or step according to any process performed in this invention, unless specifically indicated otherwise, shall mean to perform under an inert atmosphere.

Throughout this application, the term "about" used to indicate any value that is appeared or expressed herein may be varied or deviated, which the variation or deviation may occur from the error of instruments and methods used to determine various values.

Hereafter, invention embodiments are shown.

The present invention relates to a method for preparing high activity ethylene polymerization catalyst, said method comprising the following steps:
(a) adding magnesium halide into alcohol solvent selected from ethanol, isopropanol, butanol, hexanol, 2-hexanol, octanol, or a mixture thereof;
(b) precipitating solution from (a) in solution of organic solvent containing organo compound of group III element selected from alkyl compound of group III element, tris(halophenyl)borane, alkylaluminium alkoxide, dialkylaluminium chloride, or a mixture thereof;
(c) adding titanium compound selected from trialkoxy titanium monochloride, dialkoxy titanium dichloride, alkoxy titanium trichloride, titanium halide, or a mixture thereof into mixture from (b) to obtain a catalyst;
(d) treating the catalyst obtained from (c) with organoaluminium compound selected from trialkylaluminium, alkylaluminium alkoxide, alkylaluminium halide, or a mixture thereof at temperature ranging from 0 to 60 °C for 2 to 5 hours, wherein the mole ratio of aluminium to titanium (Al/Ti) for treatment is in a range of 1 to 30.

In one aspect of the invention, magnesium halide in step (a) may be selected from magnesium dichloride, magnesium dibromide, or a mixture thereof.

Preferable, magnesium halide is magnesium dichloride.

In one aspect, alcohol solvent in step (a) may be selected from ethanol, isopropanol, butanol, hexanol, 2-hexanol, octanol, or a mixture thereof. Preferably, alcohol solvent is ethanol.

In one aspect, organo compound of group III element in step (b) is alkyl compound of group III element which can be selected from trimethylaluminium, triethylaluminium, triisobutylaluminium, tripropylaluminium, trimethylborane, triethylborane, triisobutylborane, or a mixture thereof.

In one aspect, organo compound of group III element in step (b) is tris(halophenyl)borane which can be selected from tris(pentafluorophenyl)borane, tris(trifluoromethylphenyl)borane, tris(tetrafluoroxylyl)borane, tris(tetrafluoro-*o*-tolyl)borane, or a mixture thereof.

In one aspect, organo compound of group III element in step (b) is alkylaluminium alkoxide which can be selected from diethylaluminium ethoxide, ethylaluminium diethoxide, diisobutyl aluminium ethoxide, or a mixture thereof.

Preferable, organo compound of group III element in step (b) is dialkylaluminium chloride which is selected from dimethylaluminium chloride, diethylaluminium chloride, diisobutylaluminium chloride, or a mixture thereof, most preferable is diethylaluminium chloride.

Titanium compound in step (c) is titanium alkoxide having at least one atom of chlorine, titanium halide, or a mixture thereof.

In one aspect, titanium compound in step (c) is titanium halide which can be selected from titanium chloride, titanium bromide, or a mixture thereof, preferable is titanium chloride.

Preferable, organoaluminium compound in step (d) is triakylaluminium which is selected from trimethylaluminium, triethylaluminium, triisobutylaluminium, tripropylaluminium, or a mixture thereof, most preferable is triethylaluminium.

In one aspect, organoaluminium compound in step (d) is alkylaluminium alkoxide which is selected from diethylaluminium ethoxide, ethylaluminium diethoxide, diisobutyl aluminum ethoxide, or mixture of said compounds.

In one aspect, organoaluminium compound in step (d) is alkylaluminium halide which is selected from dimethylaluminium chloride, diethylaluminium chloride, diisobutylaluminium chloride, methylaluminium dichloride, ethylaluminium dichloride, isobutylaluminium dichloride, aluminium trichloride, or a mixture thereof.

In one aspect of the invention, the mole ratio of aluminium to titanium for treating in step (d) is in the range of 1 to 10, and preferable is in the range of 1 to 5.

In one aspect of the invention, the treatment temperature in step (d) is in the range of 0 °C to room temperature, and preferable the treatment temperature is at ambient temperature.

Preferable, the treatment time in step (d) is in the range of 2 to 3 hours.

In each step of the catalyst preparation in this invention, unless stated otherwise , organic solvent that may be selected include aromatic hydrocarbon, aliphatic hydrocarbon, cyclic hydrocarbon, preferable are toluene, benzene, ethylbenzene, cumene, xylene, hexane, cyclohexane, cyclohexene, heptane, or octane.

In one embodiment, said catalyst preparation may further comprising a drying step of catalyst from step (d) which can be selected from stirring evaporation, vacuum drying, freeze drying, etc.

The catalyst may be used in the form of liquid, semi-liquid, or solid.

In one aspect, olefin polymerization reaction may be operated in reactor in liquid phase, gas phase, or slurry phase, and may be operated in batch or continuous process.

The olefin is ethylene.

The following examples aim for explanation purpose of this invention only.

### Catalyst sample preparation

The present invention prepares high activity olefin polymerization catalyst by treating the catalyst by contacting with organoaluminium compound, wherein said catalyst may be prepared by a method described in the following comparative example Cat NT.

### Comparative example Cat NT

About 10 g of magnesium chloride (MgCl₂) was added into about 37 ml of anhydrous ethanol at room temperature. Then, heated at temperature about 90 to 100 °C while stirring to dissolve MgCl₂ solution and made it to be homogenized solution. Then, said solution was slowly added into mixture of about 160 ml of heptane and about 40 ml of diethyl aluminium chloride (DEAC) that had been temperature controlled in the range about 0 to 10 °C. Once the addition had been performed, the reaction was left at room temperature for at least 1 hour, and resulted solid was washed at least 2 times by using about 200 ml of heptane, then added with 200 ml of heptane, following by about 35 ml of titanium tetrachloride (TiCl₄). Then, said mixture was refluxed at about 90 to 100 °C for 1 hour. Resulted solid was washed at temperature of about 90 to 100 °C with at least 200 mL of heptane until there was no titanium found in washing solution. Then, it was dried under vacuum to give the catalyst as a final product.

### Catalyst preparation according to the invention. Cat T1-T3

The catalyst according to the invention could be prepared by treating catalyst prepared from the above method by exposing to triethyl aluminium.

About 0.25 g of comparison catalyst Cat NT was suspended in 100 ml of hexane or heptane. Then, triethyl aluminium (TEA) was added at a mole ratio of aluminum to titanium (Al/Ti) of 1 for Cat T1, 5 for Cat T2 and 30 for Cat T3. The catalyst would change from white to grey-brown. Thereafter, said mixture was stirred at temperature is in the range of 0 to 60 °C for 2 to 5 hours. Resulted catalyst is analyzed for activation percentage and/or for ethylene polymerization.

### Comparative example. Cat T4-T7

The catalyst not according to the invention could be prepared by treating catalyst prepared from the Cat NT by exposing to triethyl aluminium.

About 0.25 g of comparison catalyst Cat NT was suspended in 100 ml of hexane or heptane. Then, triethyl aluminium (TEA) was added at a mole ratio of aluminum to titanium (Al/Ti) of 50 for Cat T4, 70 for Cat T5, 80 for Cat T6 and 100 for Cat T7. The catalyst would change from white to grey-brown. Thereafter, said mixture was stirred at temperature is in the range of 0 to 60 °C for 2 to 5 hours. Resulted catalyst is analyzed for activation percentage and/or for ethylene polymerization.

### Ethylene polymerization

Ethylene polymerization can be done by using the following conditions, wherein hexane, the catalyst, and triethyl aluminium were added into a reactor. Then, heating the reactor to the predetermined temperature while ethylene was fed continuously into the reactor. Resulted polymer product was filtered and dried.

| | |
|---|---|
| size of reactor | 5 liters |
| feeding of hexane | 2.5 liters |
| feeding of catalyst | 0.1 mmol/liter |
| feeding of TEA | 1 mmol/liter |
| feeding of hydrogen | 0.35 MPa |
| feeding of ethylene | 0.45 MPa |
| reaction temperature | 80 °C |
| reaction time | 120 minutes |

Hereafter, properties of the catalyst and polymer obtained from the catalyst according to invention would be tested, wherein a method and equipment are commonly used.

### Activation percentage of catalyst treated by TEA

About 0.15 to 0.23 g of catalyst according to the invention was mixed with about 10 ml of isopropanol, about 30 ml of 6 molar sulfuric acid solution (H₂SO₄), and about 30 ml of deionized water was titrated with 0.1 M Ce(SO₄)₂.4H₂O standard solution wherein diphenylamine was used as an indicator. The solution was turned to be dark-blue color at the end point.

Analysis of molecular weight (Mw) and molecular weight distribution (MWD) of polymer

Molecular weight and molecular weight distribution of polymer were determined using gel permeation chromatography (GPC), Model of Polymer Char GPC-IR using column PLgel 10 µm MIXED-B and PLgel 10 µm Guard, at temperature about 140 °C, using 1,2,4-trichlorobenzene (TCB) as an eluent, flow rate at 1 ml/min. Measured molecular weight was compared with molecular weight graph from polyethylene standard from Polymer Laboratory which covered molecular weight in the range of 540 to 2,000,000.

### Analysis of polymer density

Polymer density was determined using Julabo FT50 according to ASTM D1505 standard.

### Analysis of melt flow rate (MFR) of polymer

Melt flow rate of polymer could be determined using CEAST 7027 according to ASTM D1238 standard.

### Analysis of homogeneity of polymer

Homogeneity of polymer could be determined using temperature rising elution fractionation - gel permeation chromatography (TREF-GPC), Polymer Char CFC, using column PLgel 10 µm MIXED-B and PLgel 10 µm Guard at temperature of 140 °C, using 1,2,4-trichlorobenzene as an eluent, flow rate at 1 ml/min. Measured molecular weight was compared with molecular weight graph from polyethylene standard from Polymer Laboratory covering molecular weight in the range of 540 to 2,000,000.

### Analysis of tensile modulus and tensile strength of polymer

Tensile modulus and tensile strength of polymer could be determined using Zwick Z050E. Polymer sample was prepared to be a sample with 3 mm thickness before being tested according to ASTM D638 standard.

### Time and temperature for treatment of catalyst

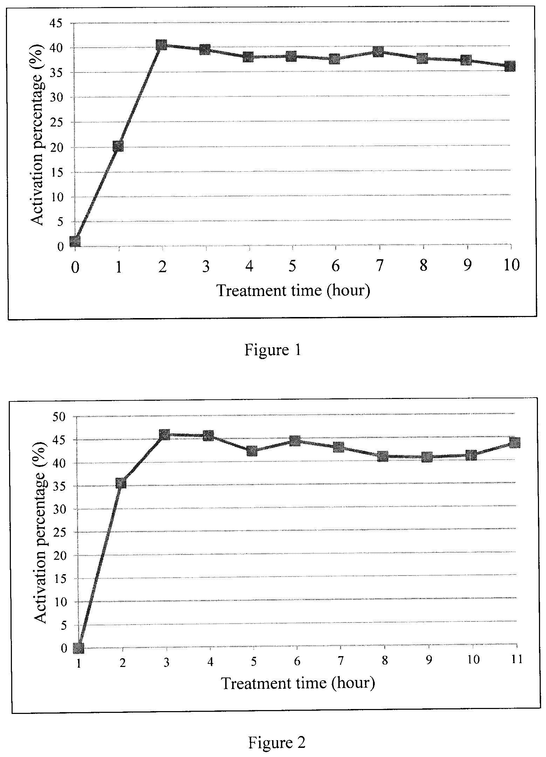

The catalyst was prepared according to the invention as described above, wherein the mole ratio of aluminium to titanium (Al/Ti) in the treatment is 5 to 1, and treatment temperature is at room temperature and 0 °C respectively. Then, the samples were collected for the analysis of reaction percentage of catalyst and TEA at different times. The result was shown in Figure 1 and 2.

### The mole ratio of aluminium to titanium (Al/Ti) for treatment

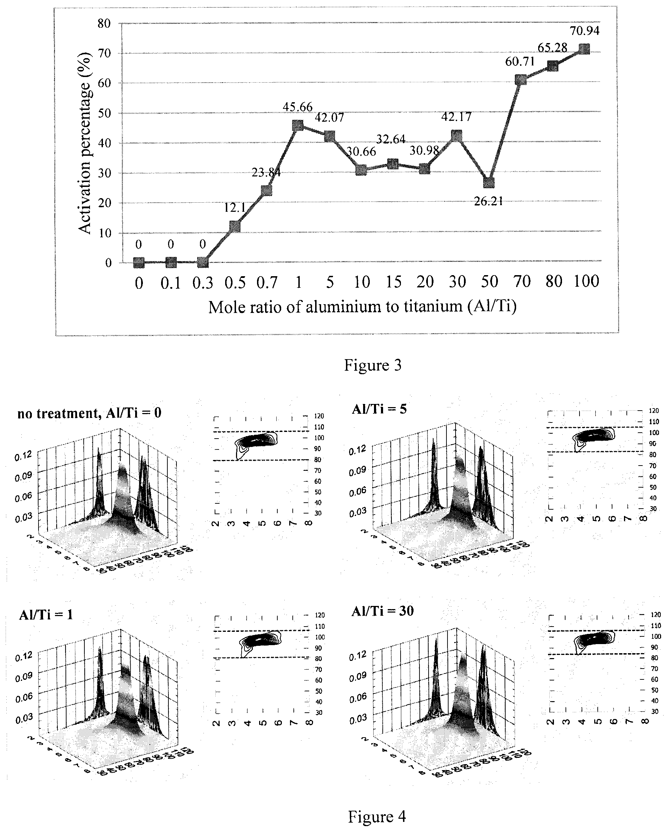

For the study of the mole ratio of aluminium to titanium that is suitable for preparing catalyst according to the invention, different mole ratios of Al/Ti were used in the preparation of the catalyst according to the invention as described above. At 3 hours of treatment at room temperature, the result was shown as Figure 3, it was found that the reaction percentage of catalyst and TEA related to the mole ratio of Al/Ti for treatment.

### Catalyst activity and polymer properties

To show catalyst activity for ethylene polymerization and polymer properties from catalyst according to the invention, comparative example Cat NT was used in comparison with catalyst according to the invention such as example Cat T1, Cat T2, Cat T3, Cat T4, Cat T5, Cat T6, and Cat T7. Treatment time was controlled to be 3 hours and treatment temperature was room temperature at different mole ratios of Al/Ti wherein said catalyst was used in ethylene polymerization. The result was shown in Table 1.

**Table 1 Catalyst activity and polymer properties resulted from different catalysts examples Cat T4, Cat T5, Cat T6 and Cat T7 are comparative examples**

| Catalyst | Mole ratio of Al/Ti used in the treatment | Reaction rate (gPE/mmol Ti.h) | Properties of prepared polymer | | | | |
|---|---|---|---|---|---|---|---|
| | | | Density (g/cm³) | Mw (g/mol) | Mn (g/mol) | Mz (g/mol) | MWD (Mw/ Mn) |
| Comparative Example Cat NT | - | 20,300 | 0.9601 | 122,231 | 7,723 | 696,219 | 15.83 |
| Example Cat T1 | 1 | 28,500 | 0.9615 | 125,851 | 9,552 | 698,730 | 13.18 |
| Example Cat T2 | 5 | 23,500 | 0.9610 | 118,100 | 8,707 | 653,406 | 13.56 |
| Example Cat T3 | 30 | 20,000 | 0.9660 | 98,210 | 7,173 | 549,174 | 13.69 |
| Example Cat T4 | 50 | 19,000 | 0.9600 | 109,791 | 9,862 | 513,752 | 11.13 |
| Example Cat T5 | 70 | 18,200 | 0.9600 | 130,324 | 11,753 | 653,440 | 11.09 |
| Example Cat T6 | 80 | 16,400 | 0.9630 | 113,160 | 10,068 | 615,517 | 11.24 |
| Example Cat T7 | 100 | 13,600 | 0.9618 | 102,153 | 9,701 | 563,083 | 12.75 |

From Table 1, when compared comparative example Cat NT to example Cat T1, Cat T2, and Cat T3, it can be found that catalyst treated with organoaluminium at the mole ratio of Al/Ti in the range of 1 to 30 showed more activity and lower molecular weight distribution.

Next, the result from the analysis of molecular weight distribution of polymer using TREF-GPC is showed in Table 2.

**Table 2 Soluble fraction of polymer from TREF-GPC analysis**

| Catalyst | Weight percentage of soluble fraction of polymer | | | |
|---|---|---|---|---|
| | Temperature < 70 °C | 70 °C ≤ Temperature < 80 °C | 80 °C ≤ Temperature ≤ 100°C | Temperature >100 °C |
| Comparative Example Cat NT | 3.58 | 7.29 | 80.61 | 8.52 |
| Example Cat T1 | 0.53 | 8.30 | 83.99 | 7.18 |
| Example Cat T2 | 0.60 | 8.75 | 83.31 | 7.34 |
| Example Cat T3 | 0.40 | 8.53 | 82.53 | 8.54 |

When considering Table 2 with Figure 4, it is found that the catalyst according to the invention Cat T1, Cat T2, and Cat T3 gave less soluble fraction of polymer in low temperature range (less than 70 °C) and high temperature range (more than 100 °C). It shows that polymer resulted from the catalyst according to the invention improved molecular weight distribution of polymer when comparing to the catalyst not treated with organoaluminium compound.

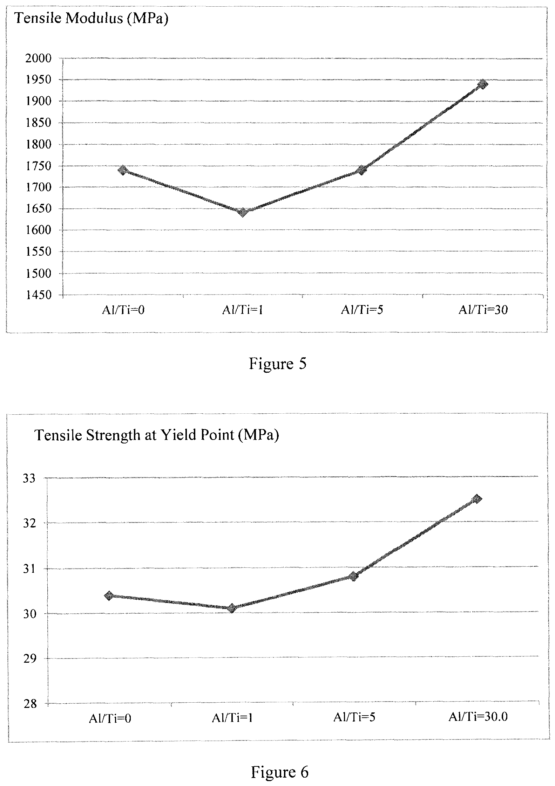

Figure 5 and 6 shows mechanical properties of the polymer resulted from ethylene polymerization reaction using different catalysts. When comparing polymers from example Cat T2 and Cat T3 with the polymer from comparative example Cat NT, it was found that catalyst treated with organoaluminium compound at the mole ratio of Al/Ti in the range of 5 to 30 resulted in the polymer with higher strength considered from higher tensile modulus and tensile strength at yield point.

From the results above, it can be said that the catalyst prepared by the process according to the invention has high activity in olefin polymerization, resulting in good mechanical properties of the polymer, and has narrow molecular weight distribution, wherein said process can be perform easily, reducing complicated steps, and can be performed at low temperature as provided in the objectives of this invention.

## Claims

1. A method for preparing a high activity ethylene polymerization catalyst, wherein said method comprising the following steps:
(a) adding magnesium halide into an alcohol solvent selected from ethanol, isopropanol, butanol, hexanol, 2-hexanol, octanol, or a mixture thereof;
(b) precipitating the solution obtained from (a) in a solution of organic solvent containing an organo compound of group III element selected from an alkyl compound of group III element, tris(halophenyl)borane, alkylaluminium alkoxide, dialkylaluminium chloride, or a mixture thereof;
(c) adding a titanium compound selected from trialkoxy titanium monochloride, dialkoxy titanium dichloride, alkoxy titanium trichloride, titanium halide, or a mixture thereof into the mixture obtained from (b) to obtain a catalyst;
(d) treating the catalyst obtained from (c) with an organoaluminium compound selected from trialkylaluminium, alkylaluminium alkoxide, alkylaluminium halide, or a mixture thereof at a temperature ranging from 0 to 60 °C for 2 to 5 hours, wherein the mole ratio of aluminium to titanium (Al/Ti) for treatment is in a range of 1 to 30.

2. The method for preparing a catalyst according to claim 1, wherein the magnesium halide in step (a) is selected from magnesium dichloride, magnesium dibromide, or a mixture thereof.

3. The method for preparing a catalyst according to claim 2, wherein the magnesium halide is magnesium dichloride.

4. The method for preparing a catalyst according to anyone of the preceding claims, wherein the alcohol solvent is ethanol.

5. The method for preparing a catalyst according to claim 1, wherein the alkyl compound of group III element in step (b)is selected from trimethylaluminium, triethylaluminium, triisobutylaluminium, tripropylaluminium, trimethylborane, triethylborane, triisobutylborane, or a mixture thereof.

6. The method for preparing a catalyst according to claim 1, wherein the tris(halophenyl)borane in step (b) is selected from tris(pentafluorophenyl)borane, tris(trifluoromethylphenyl)borane, tris(tetrafluoroxylyl)borane, tris(tetrafluoro-*o-*tolyl)borane, or a mixture thereof.

7. The method for preparing a catalyst according to claim 1, wherein the alkylaluminium alkoxide in step (b) is selected from diethylaluminium ethoxide, ethylaluminium diethoxide, diisobutyl aluminium ethoxide, or a mixture thereof.

8. The method for preparing a catalyst according to claim 1, wherein the dialkylaluminium chloride in step (b) is selected from dimethylaluminium chloride, diethylaluminium chloride, diisobutylaluminium chloride, or a mixture thereof.

9. The method for preparing a catalyst according to claim 8, wherein the dialkylaluminium chloride is diethylaluminium chloride.

10. The method for preparing a catalyst according to claim 1, wherein the titanium compound in step (c) is selected from titanium halide.

11. The method for preparing a catalyst according to claim 10, wherein the titanium halide is titanium chloride.

12. The method for preparing a catalyst according to claim 1, wherein the organoaluminium compound in step (d) is selected from trimethylaluminium, triethylaluminium, triisobutylaluminium, tripropylaluminium, diethylaluminium ethoxide, ethylaluminium diethoxide, diisobutyl aluminium ethoxide, dimethylaluminium chloride, diethylaluminium chloride, diisobutylaluminium chloride, methylaluminium dichloride, ethylaluminium dichloride, isobutylaluminium dichloride, aluminium trichloride, or a mixture thereof.

13. The method for preparing a catalyst according to claim 12, wherein the organoaluminium compound is triethylaluminium.

14. The method for preparing a catalyst according to anyone of claims 1,12 and 13, wherein the mole ratio of aluminium to titanium for treating in step (d) is in the range of 1 to 10.

15. The method for preparing a catalyst according to claim 14, wherein the mole ratio of aluminium to titanium for treating in step (d) is in the range of 1 to 5.

16. The method for preparing a catalyst according to anyone of claims 1, and 12 to 15, wherein the treatment temperature in step (d) is in the range of 0 °C to room temperature.

17. The method for preparing a catalyst according to claim 16, wherein the treatment temperature is ambient temperature.

18. The method for preparing a catalyst according to anyone of claims 1, and 12 to 17, wherein the treatment time in step (d) is in the range of 2 to 3 hours.

19. The method for preparing a catalyst according to anyone of the preceding claims, further comprising a drying step.

## Patentansprüche

1. Verfahren zur Bereitstellung eines hochaktiven Ethylenpolymerisationskatalysators, wobei das Verfahren die folgenden Schritte umfasst:
(a) Zugabe von Magnesiumhalogenid in ein Alkohollösungsmittel, wobei das Alkohollösungsmittel unter Ethanol, Isopropanol Butanol, Hexanol, 2-Hexanol, Octanol oder einer Mischung davon ausgewählt ist;
(b) Präzipitieren der aus (a) erhaltenen Lösung in einer Lösung eines organischen Lösungsmittels, die eine Organo-Verbindung eines Elements der Gruppe III enthält, die unter einer Alkyl-Verbindung eines Elements der Gruppe III, Tris(halophenyl)boran, Alkylaluminiumalkoxid, Dialkylaluminiumchlorid oder einer Mischung davon ausgewählt ist;
(c) Zugabe einer Titan-Verbindung zu der aus (b) erhaltenen Mischung, um einen Katalysator zu erhalten, wobei die Titan-Verbindung unter Trialkoxy-Titanmonochlorid, Dialkoxy-Titandichlorid, Alkoxy-Titantrichlorid, Titanhalogenid oder einer Mischung davon ausgewählt ist;
(d) Behandeln des aus (c) erhaltenen Katalysators mit einer Organoaluminiumverbindung bei einer Temperatur im Bereich von 0 bis 60 °C für 2 bis 5 Stunden, wobei die Organoaluminiumverbindung unter Triakylaluminium, Alkylaluminiumalkoxid, Alkylaluminiumhalogenid oder einer Mischung hiervon ausgewählt ist, wobei das Molverhältnis von Aluminium zu Titan (Al/Ti) zur Behandlung in einem Bereich von 1 bis 30 liegt.

2. Verfahren zur Bereitstellung eines Katalysators nach Anspruch 1, wobei das Magnesiumhalogenid in Schritt (a) unter Magnesiumdichlorid, Magnesiumdibromid oder einer Mischung davon ausgewählt ist.

3. Verfahren zur Bereitstellung eines Katalysators nach Anspruch 2, wobei das Magnesiumhalogenid Magnesiumdichlorid ist.

4. Verfahren zur Bereitstellung eines Katalysators nach einem der vorhergehenden Ansprüche, wobei das Alkohollösungsmittel Ethanol ist.

5. Verfahren zur Bereitstellung eines Katalysators nach Anspruch 1, wobei die Alkylverbindung eines Elements der Gruppe III in Schritt (b) unter Trimethylaluminium, Triethylaluminium, Triisobutylaluminium, Tripropylaluminium, Trimethylboran, Triethylboran, Triisobutylboran oder einer Mischung davon ausgewählt ist.

6. Verfahren zur Bereitstellung eines Katalysators nach Anspruch 1, wobei das Tris(halogenphenyl)boran in Schritt (b) unter Tris(pentafluorphenyl)boran, Tris(trifluormethylphenyl)boran, Tris(tetrafluoroxylyl)boran, Tris(tetrafluoro-o-tolyl)boran oder einer Mischung davon ausgewählt ist.

7. Verfahren zur Bereitstellung eines Katalysators nach Anspruch 1, wobei das Alkylaluminiumalkoxid in Schritt (b) unter Diethylaluminiumethoxid, Ethylaluminiumdiethoxid, Diisobutylaluminiumethoxid oder einer Mischung davon ausgewählt ist.

8. Verfahren zur Bereitstellung eines Katalysators nach Anspruch 1, wobei das Dialkylaluminiumchlorid in Schritt (b) unter Dimethylaluminiumchlorid, Diethylaluminiumchlorid, Diisobutylaluminiumchlorid oder einer Mischung davon ausgewählt ist.

9. Verfahren zur Bereitstellung eines Katalysators nach Anspruch 8, wobei das Dialkylaluminiumchlorid Diethylaluminiumchlorid ist.

10. Verfahren zur Bereitstellung eines Katalysators nach Anspruch 1, wobei die Titanverbindung in Schritt (c) unter Titanhalogenid ausgewählt ist.

11. Verfahren zur Bereitstellung eines Katalysators nach Anspruch 10, wobei das Titanhalogenid Titanchlorid ist.

12. Verfahren zur Bereitstellung eines Katalysators nach Anspruch 1, wobei die Organoaluminiumverbindung in Schritt (d) unter Trimethylaluminium, Triethylaluminium, Triisobutylaluminium, Tripropylaluminium, Diethylaluminiumethoxid, Ethylaluminiumdiethoxid, Diisobutylaluminiumethoxid, Dimethylaluminiumchlorid, Diethylaluminiumchlorid, Diisobutylaluminiumchlorid, Methylaluminiumdichlorid, Ethylaluminiumdichlorid, Isobutylaluminiumdichlorid, Aluminiumtrichlorid oder einer Mischung davon ausgewählt ist.

13. Verfahren zur Bereitstellung eines Katalysators nach Anspruch 12, wobei die Organoaluminiumverbindung Triethylaluminium ist.

14. Verfahren zur Bereitstellung eines Katalysators nach einem der Ansprüche 1, 12 und 13, wobei das Molverhältnis von Aluminium zu Titan zur Behandlung in Schritt (d) im Bereich von 1 bis 10 liegt.

15. Verfahren zur Bereitstellung eines Katalysators nach Anspruch 14, wobei das Molverhältnis von Aluminium zu Titan zur Behandlung in Schritt (d) im Bereich von 1 bis 5 liegt.

16. Verfahren zur Bereitstellung eines Katalysators nach einem der Ansprüche 1 und 12 bis 15, wobei die Behandlungstemperatur in Schritt (d) im Bereich von 0 °C bis Raumtemperatur liegt.

17. Verfahren zur Bereitstellung eines Katalysators nach Anspruch 16, wobei die Behandlungstemperatur die Umgebungstemperatur ist.

18. Verfahren zur Bereitstellung eines Katalysators nach einem der Ansprüche 1 und 12 bis 17, wobei die Behandlungszeit in Schritt (d) im Bereich von 2 bis 3 Stunden liegt.

19. Verfahren zur Bereitstellung eines Katalysators nach einem der vorhergehenden Ansprüche, das ferner einen Trocknungsschritt umfasst.

## Revendications

1. Procédé pour préparer un catalyseur de polymérisation d'éthylène à activité élevée, dans lequel ledit procédé comprend les étapes suivantes :
(a) l'ajout d'halogénure de magnésium dans un solvant alcool sélectionné parmi l'éthanol, l'isopropanol, le butanol, l'hexanol, le 2-hexanol, l'octanol ou un mélange de ceux-ci ;
(b) la précipitation de la solution obtenue en (a) dans une solution d'un solvant organique contenant un composé organo d'un élément du groupe III sélectionné parmi un composé alkyle d'un élément du groupe III, un tris (halophényl)borane, un alcoxyde d'alkylaluminium, un chlorure de dialkylaluminium ou un mélange de ceux-ci ;
(c) l'ajout d'un composé de titane sélectionné parmi un monochlorure de trialcoxy titane, un dichlorure de dialcoxy titane, un trichlorure d'alcoxy titane, un halogénure de titane ou un mélange de ceux-ci dans le mélange obtenu en (b) pour obtenir un catalyseur ;
(d) le traitement du catalyseur obtenu en (c) avec un composé organoaluminium sélectionné parmi un trialkylaluminium, un alcoxyde d'alkylaluminium, un halogénure d'alkylaluminium ou un mélange de ceux-ci à une température comprise entre 0 et 60°C pendant 2 à 5 heures, dans lequel le rapport molaire de l'aluminium sur le titane (Al/Ti) pour le traitement est compris entre 1 et 30.

2. Procédé pour préparer un catalyseur selon la revendication 1, dans lequel l'halogénure de magnésium de l'étape (a) est sélectionné parmi le dichlorure de magnésium, le dibromure de magnésium ou un mélange de ceux-ci.

3. Procédé pour préparer un catalyseur selon la revendication 2, dans lequel l'halogénure de magnésium est le dichlorure de magnésium.

4. Procédé pour préparer un catalyseur selon l'une quelconque des revendications précédentes, dans lequel le solvant alcool est l'éthanol.

5. Procédé pour préparer un catalyseur selon la revendication 1, dans lequel le composé alkyle d'un élément du groupe III de l'étape (b) est sélectionné parmi le triméthylaluminium, le triéthylaluminium, le triisobutylaluminium, le tripropylaluminium, le triméthylborane, le triéthylborane, le triisobutylborane ou un mélange de ceux-ci.

6. Procédé pour préparer un catalyseur selon la revendication 1, dans lequel le tris (halophényl)borane de l'étape (b) est sélectionné parmi le tris(pentafluorophényl)borane, le tris(trifluorométhylphényl)borane, le tris(tétrafluoroxylyl)borane, le tris(tétrafluoro-*o-*tolyl)borane ou un mélange de ceux-ci.

7. Procédé pour préparer un catalyseur selon la revendication 1, dans lequel l'alcoxyde d'aluminium de l'étape (b) est sélectionné parmi l'éthoxyde de diéthylaluminium, le diéthoxyde d'éthylaluminium, l'éthoxyde de diisobutylaluminium ou un mélange de ceux-ci.

8. Procédé pour préparer un catalyseur selon la revendication 1, dans lequel le chlorure de dialkylaluminium de l'étape (b) est sélectionné parmi le chlorure de diméthylaluminium, le chlorure de diéthylaluminium, le chlorure de diisobutylaluminium ou un mélange de ceux-ci.

9. Procédé pour préparer un catalyseur selon la revendication 8, dans lequel le chlorure de dialkylaluminium est le chlorure de diéthylaluminium.

10. Procédé pour préparer un catalyseur selon la revendication 1, dans lequel le composé de titane de l'étape (c) est sélectionné parmi les halogénures de titane.

11. Procédé pour préparer un catalyseur selon la revendication 10, dans lequel l'halogénure de titane est le chlorure de titane.

12. Procédé pour préparer un catalyseur selon la revendication 1, dans lequel le composé organoaluminium de l'étape (d) est sélectionné parmi le triméthylaluminium, le triéthylaluminium, le triisobutylaluminium, le tripropylaluminium, l'éthoxyde de diéthylaluminium, le diéthoxyde d'éthylaluminium, l'éthoxyde de diisobutylaluminium, le chlorure de diméthylaluminium, le chlorure de diéthylaluminium, le chlorure de diisobutylaluminium, le dichlorure de méthylaluminium, le dichlorure d'éthylaluminium, le dichlorure d'isobutylaluminium, le trichlorure d'aluminium ou un mélange de ceux-ci.

13. Procédé pour préparer un catalyseur selon la revendication 12, dans lequel le composé organoaluminium est le triéthylaluminium.

14. Procédé pour préparer un catalyseur selon l'une quelconque des revendications 1, 12 et 13, dans lequel le rapport molaire de l'aluminium sur le titane pour le traitement de l'étape (d) est compris entre 1 et 10.

15. Procédé pour préparer un catalyseur selon la revendication 14, dans lequel le rapport molaire de l'aluminium sur le titane pour le traitement de l'étape (d) est compris entre 1 et 5.

16. Procédé pour préparer un catalyseur selon l'une quelconque des revendications 1 et 12 à 15, dans lequel la température de traitement de l'étape (d) est comprise entre 0 °C et la température ambiante.

17. Procédé pour préparer un catalyseur selon la revendication 16, dans lequel la température de traitement est la température ambiante.

18. Procédé pour préparer un catalyseur selon l'une quelconque des revendications 1 et 12 à 17, dans lequel la durée de traitement de l'étape (d) est comprise entre 2 et 3 heures.

19. Procédé pour préparer un catalyseur selon l'une quelconque des revendications précédentes, comprenant en outre une étape de séchage.
